# EUROPEAN PATENT SPECIFICATION

(11) **EP 4 162 785 B1**
(45) Date of publication and mention of the grant of the patent: **18.12.2024**
(21) Application number: 21201190.2
(22) Date of filing: 06.10.2021
(51) Int. Cl.: A01C 23/04, A01M 7/00

(54) **METHOD FOR FILLING A TANK SYSTEM OF AN AGRICULTURAL SPRAYER WITH A LIQUID SPRAYING MATERIAL AND AGRICULTURAL SPRAYER**
VERFAHREN ZUM BEFÜLLEN EINES TANKSYSTEMS EINER LANDWIRTSCHAFTLICHEN SPRITZMASCHINE MIT EINEM FLÜSSIGEN SPRITZMATERIAL UND LANDWIRTSCHAFTLICHE SPRITZMASCHINE
PROCÉDÉ DE REMPLISSAGE D'UN SYSTÈME DE RÉSERVOIR D'UN VAPORISATEUR AGRICOLE AVEC UN MATÉRIAU DE PULVÉRISATION LIQUIDE ET VAPORISATEUR AGRICOLE

(43) Date of publication of application: 12.04.2023
(73) Proprietor: Kverneland Group Nieuw-Vennep B.V., 2153 LR Nieuw-Vennep (NL)
(72) Inventor: Van Turenhout, Jeroen, 2153 LR Nieuw-Vennep (NL); Korsuize, Vincent, 2153 LR Nieuw-Vennep (NL)
(74) Representative: Bittner, Thomas L.

(56) References cited:
- AU-A1- 2011 224 129
- CA-A1- 3 133 562
- SE-B- 460 395
- US-A1- 2021 237 103
- US-B1- 6 409 375

## Description

The present invention refers to a method for filling a tank system of an agricultural sprayer with a liquid spraying material and an agricultural sprayer.

### Background

Agricultural sprayer is used for applying a spraying material which may also be referred to as spray crop input such as fertilizer or similar spraying material in the field of agriculture. The agricultural sprayer is provided with a spraying system having a tank system for receiving the spraying material and a dispensing device provided with a plurality of nozzles configured to dispense the spraying material. The agricultural sprayer may be provided by an implement to be attached to a tractor. Alternatively, the agricultural sprayer can provided as a self-prepared vehicle implemented, for example, by a tractor carrying the spraying system.

Documents EP 4 038 59 B1 and EP 4 728 60 B1 each refer to a self-contained, agricultural field spraying system including a liquid container and an additional vessel, which communicate with each other via a line system and have a conveyor means for pumping-round the liquid. The spray liquid is exchanged between the liquid container and the additional vessel by means of the conveyor means disposed in the liquid container. The conveyor means is formed by two water-jet pumps, in that one water-jet pump is situated in the supply line extending from the liquid container to the additional vessel, and the other water-jet pump is situated in the return line extending from the additional vessel to the liquid container. The spray liquid is introduced and mixed centrally via the liquid container.

Document EP 1 985 178 B1 discloses an enclosed agricultural field sprayer system comprising a liquid tank and an auxiliary container which are connected to one another via a pipe system and exhibit a delivery arrangement for transferring and / or circulating the liquid. The exchange of the liquid between the liquid tank and the auxiliary container is effected by means of assigned delivery arrangements, in conjunction with which means are provided for the switching on and off of the delivery arrangements. The means for the switching on and off of the delivery arrangements for the purpose of transferring and / or circulating the liquid from the tank into the container and vice versa are configured as electrically switchable means. An electrical and / or electronic sensor unit is provided for registering the liquid level in the liquid tank and the auxiliary container. The sensor units transmit signals to a processing unit, and the level data are computable from the signals. The electrically switchable means are capable of being actuated by the processing unit on the basis of the computed data.

Document EP 2 084 964 A1 discloses a spraying device for the application of liquids for agricultural purposes having a spray bar arrangement associated with a vehicle with a liquid line extending transversely to the direction of travel, which is provided at intervals with spray nozzles. A liquid to be dispensed can be fed to the spray nozzles via the liquid line. A metering pump is provided for conveying the carrier liquid from a liquid tank and generating the spray pressure. A pump is conveying an active substance agent and feeding it into the carrier liquid in a metering manner. A premixing container is provided for pre-diluting and / or dissolving the active substance agent with and / or in dilution liquid prior to dispensing the liquids. The premixing container is connected via a line to the metering pump feeding the pre-diluted active substance agent into the carrier liquid prior to dispensing the liquids. The premixing container is arranged at a distance from the liquid tank.

Document EP 3 024 321 B1 discloses a method for managing the filling of a crop protection product distribution apparatus having a spray mixture container, the method comprising the steps of: providing a filling machine for filling the spray mixture container, providing a mobile computer apparatus which has a data connection to the filling machine, transmitting a filling order to the filling machine by means of the mobile computer apparatus, and filling the spray mixture container by means of the filling.

Document US 6,715,515 B2 discloses a chemical loading system having a venturi located at the top of a solution tank. An anti-bridging nozzle is provided at the outlet of the eductor hopper. To reduce air space in the granular material and increase pull by the venturi vacuum, fluid is directed to the material through the anti-bridging nozzle and through a rinse ring around the top of the hopper. The rinse ring, also used to rinse the hopper after loading the material and provide structural rigidity, includes a rolled edge at the top of the hopper walls with notches in the edge of the ring to provide improved placement of rinsing solution.

A method for dispensing an agricultural liquid is further disclosed in CA 3 133 562 A1. Another method and a system is disclosed in AU 2011 224 129 A1.

### Summary

It is an object to provide a method for filling a tank system of an agricultural sprayer with a liquid spraying material and an agricultural sprayer which allow for a more efficient management of a filling procedure. Also, it is an object to provide a homogeneous liquid spraying material in separated tanks of a spraying system of the agricultural sprayer.

For solving the problem, a method for filling a tank system of an agricultural sprayer with a liquid spraying material according to claim 1 is provided. Further, an agricultural sprayer according to claim 13 is provided. Additional aspects are disclosed in dependent claims.

According to an aspect, a method for filling a tank system of an agricultural sprayer with liquid spraying material is provided. An agricultural sprayer is provided with a spraying system comprising: a tank system provided with a first tank and an second tank both configured to receive a spraying material being a liquid mixture containing water and chemical; a pump device; a dispensing device having a plurality of nozzles configured to dispense the liquid mixture; a pipe system connected to the first tank, the second tank, the pump device, and the dispensing device; and a control device configured to control at least a filling process of the tank system. The first tank is filled with a first target volume of the liquid mixture, and the second tank is filled with a second target volume of the liquid mixture in the filling process controlled by the control device. The liquid mixture is provided with a predetermined concentration of the chemical in both the first tank and the second tank. The filling process comprises the following: providing filling data indicative of the first target volume and the second target volume in the control device; filling the first tank with a basic volume of the liquid mixture, the basic volume of the liquid mixture containing a total amount of the chemical to be provided in the first tank and the second tank; determining a transfer volume of the liquid mixture by the control device, the transfer volume being smaller than the basic volume and containing a part amount from the total amount of the chemical to be contained in the second target volume of the liquid mixture in the second tank; transferring the transfer volume of the liquid mixture from the first tank to the second tank through the pipe system; and filling the tank system with additional water for providing the first tank with the first target volume of the liquid mixture and the second tank with the second target volume of the liquid mixture, the liquid mixture containing the chemical with the predetermined concentration in both the first tank and the second tank.

According to another aspect, an agricultural sprayer is provided comprising a spraying system having: a tank system provided with a first tank and an second tank both configured to receive a spraying material being a liquid mixture containing water and chemical; a pump device; a dispensing device having a plurality of nozzles configured to dispense the liquid mixture; a pipe system connected to the first tank, the second tank, the pump device, and the dispensing device; and a control device configured to control at least a filling process of the tank system. For filling the tank system, the agricultural sprayer is configured to fill the first tank with a first target volume of the liquid mixture and the second tank with a second target volume of the liquid mixture in the filling process controlled by the control device, the liquid mixture being provided with a predetermined concentration of the chemical in both the first tank and the second tank. The filling is comprising: providing filling data indicative of the first target volume and the second target volume in the control device; filling the first tank with a basic volume of the liquid mixture, the basic volume of the liquid mixture containing a total amount of the chemical to be provided in the first tank and the second tank; determining a transfer volume of the liquid mixture by the control device, the transfer volume being smaller than the basic volume and containing a part amount from the total amount of the chemical to be contained in the second target volume of the liquid mixture in the second tank; transferring the transfer volume of the liquid mixture from the first tank to the second tank through the pipe system; and filling the tank system with additional water for providing the first tank with the first target volume of the liquid mixture and the second tank with the second target volume of the liquid mixture, the liquid mixture containing the chemical with the predetermined concentration in both the first tank and the second tank.

The filling technology proposed allows for a filling process in which the chemical is to be dispensed to the tank system in a single filling step at the time the liquid mixture is filled into the first tank. The chemical which may also be referred to as active agent can be supplied to the first tank together with the water, for example as a mixture of water and chemical, and / or separately from water. The first tank is filled with a basic volume of the liquid mixture containing a total amount of the chemical to be provided in the first tank and the second tank. Subsequently, a transfer volume of the liquid mixture is determined. The transfer volume will be smaller than the basic volume and is to contain a part amount from the total amount of the chemical, the part amount is to be provided in the second target volume of the liquid mixture in the second tank for providing one and the same (common) concentration of the chemical in both the first tank and the second tank at the end of the filling process. A remaining amount of the total amount of chemical will remain in the first tank after conveying the transfer volume to the second tank for providing the common concentration of the chemical in the first tank. Thus, the tank system (system of tanks) comprising or being made of the first tank and the second tank is filled with a homogeneous mixture of water and chemical in the filling process. The time efficient filling process at the end provides an optimized filling of the tank system with a common concentration of the chemical in the liquid mixture throughout the tank system.

No circulation of liquid mixture back and forth between the first tank and the second tank is necessary for generating the homogeneous liquid mixture.

The liquid mixture with the predetermined concentration of the chemical can be dispensed as single volume in the operation of the agricultural sprayer on the field. In the process of dispensing the spraying material the user is provided with complete freedom from which of the tanks spraying material is to be dispensed at which time and in which order during operation of the agricultural sprayer for applying spray crop input. Also, depending on the spraying action to be conducted the user can select either the first tank or the second tank to be emptied first.

The liquid mixture may be provided as a liquid solution. The chemical, in an embodiment, may be one of herbicide, fertilizer, fungicide, biocide or similar.

The first tank and the second tank may be provided with different tank volume. In an example, the first tank is provided with a first tank volume bigger than the second tank volume.

The method may further comprise providing the first tank as a rear tank of the agricultural sprayer; providing the second tank as a front tank of the agricultural sprayer; and balancing load or weight provided by the tank system to the agricultural sprayer by first filling a basic volume of water into the second tank and afterwards filling the basic volume of the liquid mixture into the first tank. The rear tank and the front tank may be carried by a tractor or some other vehicle which may be a self-propelled vehicle. In this embodiment, the order of some of filling steps ensures balancing of weight or load provided by the first tank and the second tank to the agricultural sprayer. Having the basic volume of water first conveyed into the second tank (front tank), will provide a kind of a counter weight in the process of filling the first tank (rear tank) afterwards.

In this or other embodiments, the first tank may be a main tank, and the second tank may provide for an additional tank.

The method may further comprise, prior to transferring the transfer amount or volume of the liquid mixture, agitating the basic volume of the liquid mixture in the first tank to generate a homogeneous mixture of water and chemical. Agitating of the basic volume of the liquid mixture in the first tank may be conducted by an agitating device provided in the first tank. It will support generating the homogeneous mixture in the first tank, and subsequently throughout the tank system as whole.

In an embodiment, the method may further comprise the following: filling the first tank through a first filling line provided with the pipe system, filling the second tank through a second filling line provided with the pipe system, cleaning the first filling line by filling additional water into the first tank while filling additional water into the tank system, and cleaning the second filling line by filling additional water into the second tank while filling additional water into the tank system. The cleaning may comprise flushing the filling lines. After conveying the additional water through the filling lines will provide cleaned filling lines after finishing the filling process. Additional water is supplied not only to the first tank, but also to the second tank. In conclusion, the first basic volume of water filled into the second tank first plus the transfer volume of the liquid mixture transferred from the first tank to the second tank is going to be smaller than the second target volume which allows for adding additional water supplied to the second tank in the process of cleaning the second filling line.

With respect to this or other embodiments, conveying the different liquids in the pipe system is supported by the pump device provided with the spraying system. The pump device may comprise one or more pumps acting jointly or separately. Lines or pipes of the pipe system can be opened or blocked, for example by valve devices, depending on the specific aspect to be conducted during operation of the spraying system, for example, the filling process and dispensing the spraying material in the field.

The method can further comprise the following: comprising providing a joined line section in the pipe system, the joined line section being part of both the first filling line and the second filling line. Thus, liquid conveyed to one of the first tank and the second tank will flows through the joint line section.

The chemical may be provided in a reservoir connected through a feeding line to the pipe system, and a venturi device may be provided in the pipe system, the venturi device being configured to suck the chemical from the reservoir through the feeding line into water flowing in the pipe system towards the first tank. The venturi device will generate an under pressure for sucking the chemical from the reservoir through the feeding line into the flowing water, thereby, generating a liquid mixture of water and chemical. One or more chemicals may be mixed into the water. The feeding line can be blocked while water is filled into one of the first tank and the second tank. For example, when filling the basic amount of water into the second tank and / or when feeding the additional water to the first tank and optionally to the second tank, the feeding line is blocked, thereby, preventing chemical from being fed into the flowing water. Blocking of the feeding line may be conducted manually by the user or by some automatically controlled valve device provided in the feeding line.

The venturi device may be provided in the joined line section. Providing the venturi device in the joint line section allows for using a single line section, namely the joint line section, for mixing the chemical into the water.

The filling of the basic volume of the liquid mixture into the first tank may comprise filling the first tank up to the first target volume. In this embodiment the basic of volume of the liquid mixture filled into the first tank is equal to the first target volume. The filling capacity provided by the first tank may be fully used in this case.

At least one of the filling data and the mixture data may be provided in response to receiving user input through a user interface connected to the control device. The user interface may be provided with an input device configured to receive user input. For example, the input device may comprise a touch sensitive display and / or a key pad. Additionally, the user interface may be provided with an output device, comprising, for example, a display for outputting data to the user. Through the user interface the user can be informed about different measures or steps conducted in the filling process. Also, the user may be asked to provide user input in relation to different steps of the filling process. The user interface, for example, may be provided with a tractor (user) terminal.

The determining of the transfer volume may be conducted by processing different information or data provided in the control device, such information or data being indicative of a plurality of parameters or variables which allow for determining the transfer volume containing the part amount of the chemical which is to be provided in the second tank for establishing a common concentration of the chemical in both the first tank and the second tank.

In an example, the determining of the transfer volume may further comprise, in the control device: providing basic filling data indicative of the basic volume the first tank; and determining the transfer volume based at least on the filling data and the basic filling data. The basic filling data may be provided by user input. Alternatively or in addition, basic filling data may be measurement data detected by a filling sensor device assigned to the first tank and configured to detect a filling level of the first tank. In another embodiment, information about the basic volume may be gathered or detected by means of a flow meter configured to detect the volume fed to the first tank in the process of filling the first tank with the basic volume of the liquid mixture. Similarly, the second tank may be provided with a filling sensor device or a flow meter device.

If, for example, the first target volume and the second target volume are the same, for example both tanks receiving a target volume of 1000l, half of the basic volume of the liquid mixture filled to the first tank, i.e. 5001, will provide for the transfer volume, thereby, transferring half of the total amount of the chemical to the second tank. In this embodiment, the control device does not need any information about the total of the chemical provided with the basic volume. Similarly, if the second target volume provides for only a portion of x percent of the total target volume (first target volume plus second target volume), the transfer volume will be x percent of the basic volume received in the first tank. Thus, in this embodiment, the transfer volume can be determined without knowing about the amount of chemical actually mixed into the basic volume. Even if the user, compared to some target amount of chemical to be added, would provide more or less chemical in the first tank, still the method proposed will ensure to have a common concentration of the chemical in both the first tank and the second tank.

Alternatively or in addition, the determining of the transfer volume may further comprise, in the control device: providing mixture data indicative of at least one of the total amount of the chemical, and the part amount of the chemical, and a basic concentration of the chemical in the basic volume; and determining the transfer volume based at least on the filling data and the mixture data. In addition or alternatively, the basic volume containing the total amount of the chemical and filled to the first tank may be indicated by the mixture data. Mixture data may be provided in response to user input in the control device. For example, the basic concentration of the chemical and / or basic volume may be provided by user input or by means of measuring the filling level in the first tank.

Prior to filling at least one of the first tank and the second tank in the filling process, the method may further comprise the following: providing allowed filling level data indicative of a first threshold level for the first tank and a second threshold level for the second tank; determining a first current filling level for the first tank; determining a second current filling level for the second tank; and starting filling at least one of the first tank and the second tank, if the first current filling level is not higher than the first threshold level and the second current filling level is not higher than the second threshold level, otherwise preventing filing of the tank system. For starting the filling for at least one of the first tank and the second tank the threshold level may require an empty tank. For this or other embodiments, the filling process may be started with conveying one of water and liquid mixture to only one of the first tank and the second tank. Alternatively, filling of both tanks may be started simultaneously. Similarly, later steps of filling may be conducted for only one of the first tank and the second tank or for both simultaneously.

The embodiments disclosed for the method of filling the tank system of the agricultural sprayer with the liquid material disclosed above may apply to the agricultural sprayer *mutatis mutandis.*

### Description of embodiments

Following, further embodiments are described by referring to the figures. In the figures, show
- Fig. 1: a schematic representation of an arrangement of a spraying system of an agricultural sprayer; and
- Fig. 2: a schematic representation of for a method for filling a tank system of the spraying system.

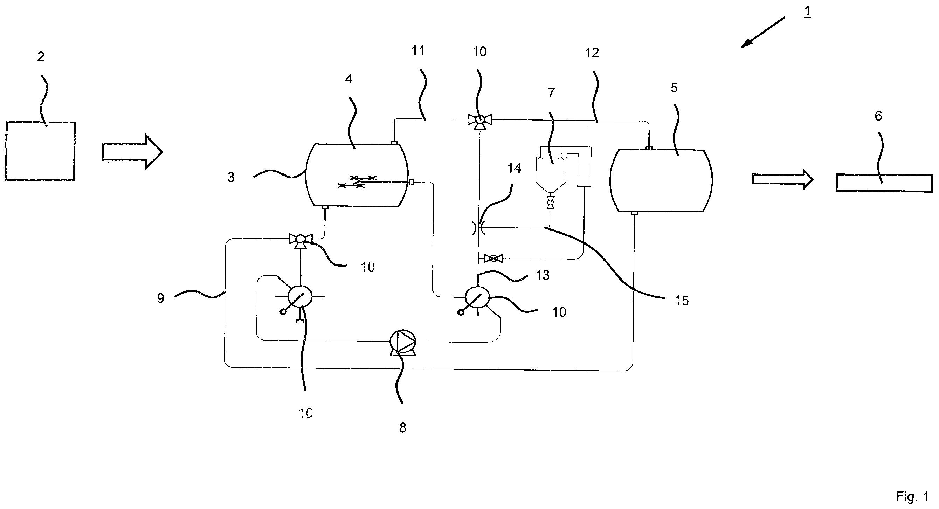

Fig. 1 shows a schematic representation of a spraying system 1 of an agricultural sprayer. A control device 2 is provided to control operation of the spraying system 1, for example, for both filling a tank system 3 provided with a first tank 4 and an second tank 5 in a filling process and dispensing a spraying material provided in the tank system 3 through a dispensing device 6 having a plurality of nozzles in the field. The spraying material to be dispensed through the plurality of nozzles 6 can be fed directly from both the first tank 4 and the second tank 5 to the plurality of nozzles 6.

The first tank 4 and the second tank 5 are provided with a first tank volume and an second tank volume, respectively. The volumes are configured to receive a spraying material provided as a liquid mixture containing water and one or more chemicals. The liquid mixture may be a solution in one embodiment. The chemical is received in a reservoir 7. If the tank system 3 is provided on a self-propelled agricultural sprayer such as a tractor provided with the spraying system 1, the first tank 4 may provide for a rear tank, and the second tank 5 may provide for a front tank.

A pump device 8 is provided for conveying or circulating the different liquids within in a pipe system 9 connected to the first tank 4, the second tank 5, and the reservoir 7. A plurality of valves 10 is provided in the pipe system 9. A first filling line 11 is connected to the first tank 2 and configured to fill the first tank 2. A second filling line 12 is provided in the pipe system 9 for filling the second tank 5. The first filling line 11 and the second filling line 12 being both connected to the pump device 8 comprise a joint line section 13. Within the joint line section 13 a venturi device 14 is provided which generates, due to flowing water, an under pressure for sucking the chemical from the reservoir 7 through a feeding line section 15 into the water flowing through the joined line section 13 for mixing water and chemical.

The pump device 8 is not only applied for filling the tank system 2, but is also applied for dispensing the spraying material through the plurality of nozzles 6. The spraying material is provided to the plurality of nozzles 6 from both the first tank 4 and the second tank 5 in operation of the agricultural sprayer on the field.

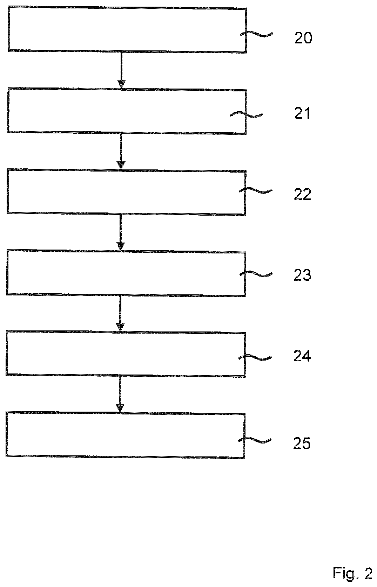

Referring to fig. 2, filling of the first tank 4 and the second tank 5 in the filling process controlled by the control device 2 is described in further detail. At the end of the filling process, the liquid mixture of water and chemical is provided with one and the same (common) concentration of the chemical in both the first tank 4 and the second tank 5. There is a homogeneous mixture of water and chemical which may be provided as a liquid solution in one embodiment. In the filling process, the first tank 4 is (finally) filled up to a first target volume, and the second tank 5 is filled up to a second target volume.

In the control device 2 different data may be provided, the data being indicative of one or more parameters related to at least one of the following: the first target volume; the second target volume; a basic volume filled to the first tank 4; a total amount of chemical provided in the first tank 4 after filling the first tank 4 with the basic volume of the liquid mixture; a part amount of the chemical to be transferred from the first tank 4 to the second tank 5 after the basic volume has been provided to the first tank 4; the common concentration of the chemical; and a basic concentration of the chemical in the basic volume filled to the first tank 4.

The data, for example, may be provided by user input. In addition or alternatively, at least some of the data may be measurement data detected by a measurement device. For example, a filling sensor device may be assigned to the first tank 4 and configured to detect a filling level of the first tank 5, for example, the basic volume of the liquid mixture provided to the first tank 4.

Filling data may be provided, the filling data being indicative of the first target volume and the second target volume. In an example, mixture data may be provided, the mixture data being indicative of the total amount of chemical to be contained in the liquid mixture for providing the liquid mixture with the predetermined (common) concentration of the chemical in both the first tank 4 and the second tank 5. Further, in an embodiment the mixture data may indicative of the part amount of chemical to be contained in the second target volume of the liquid mixture in the second tank 5 for providing the second target volume of the liquid mixture with the predetermined concentration of the chemical.

According to an embodiment, in step 20, a basic volume of water (free of chemical) is filled into the second tank 4 through the second filling line 12. During such filling procedure the feeding line section 15 connecting the reservoir 4 with the venturi device 14 is blocked, thereby, preventing chemical from being fed into the flowing water.

The basic volume of the liquid mixture is filled into the first tank 4 in step 21, the basic volume of the liquid mixture containing the total amount of chemical. The mixing process for mixing the water with the total amount of chemical by means of the venture device 14 is controlled by the control device 2. Thus, for the first and second target volume to be provided in the tank system 3, the total amount of chemical necessary for providing the liquid mixture with one and the same (common) concentration of the chemical in both the first tank 4 and the second tank 5 is provided to the tank system 2 in a single mixture filling step.

In step 22, based on some or all data provided in the control device 2 (see above), a transfer volume of the liquid mixture, provided before to in the first tank 4, is determined for transfer from the first tank 4 to the second tank 5. Depending on the data or information provided in the control device 3, the transfer volume can be calculated in different ways.

In step 23, the transfer volume of the liquid mixture is transferred from the first tank 4 to the second tank 5. By the control device 2, the transfer volume of the liquid mixture is determined before to contain the part amount of the chemical. Thus, the part amount of chemical necessary for providing the predetermined concentration of the chemical within the second tank 5, can be transferred in a "one-way" transfer process from the first tank 4 to the second tank 5. The transfer may be conducted by a single transfer step.

Additional water is filled into the first tank 4 to fill the main 4 tank up to the first target volume (step 24). With respect to the second tank 5, if the basic volume of water conveyed to the second tank 5 first and the transfer volume do not sum up to the second target volume, optionally additional water may be filled into the second tank 5 at the same time and / or afterwards filling the additional water to the first tank 4 (step 25).

Filling the additional water into the tank system 3 through the first and the second filling line 11, 12 will clean such lines of the pipe system 9 having transported before the liquid mixture containing water and chemical.

## Claims

1. A method for filling a tank system of an agricultural sprayer with a liquid spraying material, comprising:
- providing an agricultural sprayer having a spraying system (1) comprising
- a tank system (3) provided with a first tank (4) and an second tank (5) both configured to receive a spraying material being a liquid mixture containing water and chemical;
- a pump device (8);
- a dispensing device (6) having a plurality of nozzles configured to dispense the liquid mixture;
- a pipe system (9) connected to the first tank (4), the second tank (5), the pump device (8), and the dispensing device (6); and
- a control device (2) configured to control at least a filling process of the tank system (3); and
- filling the first tank (4) with a first target volume of the liquid mixture and the second tank (5) with a second target volume of the liquid mixture in the filling process controlled by the control device (2), the liquid mixture being provided with a predetermined concentration of the chemical in both the first tank (4) and the second tank (5), comprising
- providing filling data indicative of the first target volume and the second target volume in the control device (2);
- filling the first tank (4) with a basic volume of the liquid mixture, the basic volume of the liquid mixture containing a total amount of the chemical to be provided in the first tank (4) and the second tank (5);
- determining a transfer volume of the liquid mixture by the control device (2), the transfer volume being smaller than the basic volume and containing a part amount from the total amount of the chemical to be contained in the second target volume of the liquid mixture in the second tank (5);
- transferring the transfer volume of the liquid mixture from the first tank (4) to the second tank (5) through the pipe system (9); and
- filling the tank system (3) with additional water for providing the first tank (4) with the first target volume of the liquid mixture and the second tank (5) with the second target volume of the liquid mixture, the liquid mixture containing the chemical with the predetermined concentration in both the first tank (4) and the second tank (5).

2. Method of claim 1, further comprising
- providing the first tank (4) as a rear tank of the agricultural sprayer;
- providing the second tank (5) as a front tank of the agricultural sprayer; and
- balancing load provided by the tank system (3) to the agricultural sprayer by first filling a basic volume of water into the second tank (5) and afterwards filling the basic volume of the liquid mixture into the first tank (4).

3. Method of claim 1 or 2, further comprising, prior to transferring the transfer volume of the liquid mixture, agitating the basic volume of the liquid mixture in the first tank (4) to generate a homogeneous mixture of water and chemical.

4. Method of at least one of the preceding claims, further comprising
- filling the first tank (4) through a first filling line (11) provided with the pipe system (9);
- filling the second tank (5) through a second filling line (12) provided with the pipe system (9);
- cleaning the first filling line (11) by filling additional water into the first tank (4) while filling additional water into the tank system (3); and
- cleaning the second filling line (12) by filling additional water into the second tank (5) while filling additional water into the tank system (3).

5. Method of claim 4, further comprising providing a joined line section in the pipe system, the joined line section (13) being part of both the first filling line (11) and the second filling line (12).

6. Method of at least one of the preceding claims, further comprising
- providing the chemical in a reservoir connected to the pipe system (9); and
- providing a venturi device (14) in the pipe system (9) configured to suck the chemical from the reservoir through a feeding line (15) into water flowing in the pipe system (9) towards the first tank (4).

7. Method of claims 5 and 6, further comprising providing the venturi device (14) in the joined line section (13).

8. Method of at least one of the preceding claims, wherein the filling of the basic volume of the liquid mixture into the first tank (4) comprises filling the first tank (4) to the first target volume.

9. Method of at least one of the preceding claims, further comprising providing the filling data in response to receiving user input through a user interface connected to the control device (2).

10. Method of at least one of the preceding claims, wherein the determining of the transfer volume further comprises, in the control device (2),
- providing basic filling data indicative of the basic volume in the first tank (4); and
- determining the transfer volume based at least on the filling data and the basic filling data.

11. Method of at least one of the preceding claims, wherein the determining of the transfer volume further comprises, in the control device (2),
- providing mixture data indicative of
- at least one of the total amount of the chemical, and the part amount of the chemical, and
- a basic concentration of the chemical in the basic volume; and
- determining the transfer volume based at least on the filling data and the mixture data.

12. Method of at least one of the preceding claims, further comprising, prior to filling at least one of the first tank (4) and the second tank (5) in the filling process,
- providing allowed filling level data indicative of a first threshold level for the first tank (4) and a second threshold level for the second tank (5);
- determining a first current filling level for the first tank (4);
- determining a second current filling level for the second tank (5); and
- starting filling at least one of the first tank (4) and the second tank (5), if the first current filling level is not higher than the first threshold level and the second current filling level is not higher than the second threshold level, otherwise preventing filing of the tank system (3).

13. An agricultural sprayer, comprising a spraying system having
- a tank system (3) provided with a first tank (4) and an second tank (5) both configured to receive a spraying material being a liquid mixture containing water and chemical;
- a pump device (8);
- a dispensing device (6) having a plurality of nozzles configured to dispense the liquid mixture;
- a pipe system (9) connected to the first tank (4), the second tank (5), the pump device (8), and the dispensing device (6); and
- a control device (2) configured to control at least a filling process of the tank system (3);
wherein, for filling the tank system (3), the agricultural sprayer is configured to fill the first tank (4) with a first target volume of the liquid mixture and the second tank (5) with a second target volume of the liquid mixture in the filling process controlled by the control device (2), the liquid mixture being provided with a predetermined concentration of the chemical in both the first tank (4) and the second tank (5), comprising
- providing filling data indicative of the first target volume and the second target volume in the control device (2);
- filling the first tank (4) with a basic volume of the liquid mixture, the basic volume of the liquid mixture containing a total amount of the chemical to be provided in the first tank (4) and the second tank (5);
- determining a transfer volume of the liquid mixture by the control device (2), the transfer volume being smaller than the basic volume and containing a part amount from the total amount of the chemical to be contained in the second target volume of the liquid mixture in the second tank (5);
- transferring the transfer volume of the liquid mixture from the first tank (4) to the second tank (5) through the pipe system (9); and
- filling the tank system (3) with additional water for providing the first tank (4) with the first target volume of the liquid mixture and the second tank (5) with the second target volume of the liquid mixture, the liquid mixture containing the chemical with the predetermined concentration in both the first tank (4) and the second tank (5).

## Patentansprüche

1. Verfahren zum Befüllen eines Tanksystems einer landwirtschaftlichen Spritzmaschine mit einem flüssigen Spritzmaterial, umfassend:
- Bereitstellen einer landwirtschaftlichen Spritzmaschine, welche ein Spritzsystem (1) aufweist, das Spritzsystem (1) aufweisend
- ein Tanksystem (3), welches einen ersten Tank (4) und einen zweiten Tank (5) aufweist, wobei beide Tanks dafür eingerichtet sind, ein Spritzmaterial, welches ein flüssiges Gemisch aus Wasser und Chemikalien ist, aufzunehmen;
- eine Pumpvorrichtung (8);
- eine Dosiervorrichtung (6), welche eine Mehrzahl von Düsen, welche dafür eingerichtet sind, das flüssige Gemisch zu dosieren, aufweist;
- ein Leitungssystem (9), welches mit dem ersten Tank (4), dem zweiten Tank (5), der Pumpvorrichtung (8) und der Dosiervorrichtung (6) verbunden ist; und
- eine Steuervorrichtung (2), welche dafür eingerichtet ist, mindestens einen Befüllungsprozess des Tanksystems (3) zu steuern; und
- beim Befüllungsprozess, welcher durch die Steuervorrichtung (2) gesteuert wird, Befüllen des ersten Tanks (4) mit einem ersten Zielvolumen des flüssigen Gemischs und des zweiten Tanks (5) mit einem zweiten Zielvolumen des flüssigen Gemischs, wobei das flüssige Gemisch sowohl im ersten Tank (4) als auch im zweiten Tank (5) mit einer vorher festgelegten Konzentration der Chemikalien bereitgestellt wird, das Befüllen umfassend
- Bereitstellen von Fülldaten, welche das erste Zielvolumen und das zweite Zielvolumen angeben, in der Steuervorrichtung (2);
- Befüllen des ersten Tanks (4) mit einem Basisvolumen des flüssigen Gemischs, wobei das Basisvolumen des flüssigen Gemischs eine Gesamtmenge der Chemikalien enthält, welche im ersten Tank (4) und im zweiten Tank (5) bereitgestellt werden soll;
- Bestimmen eines Transfervolumens des flüssigen Gemischs durch die Steuervorrichtung (2), wobei das Transfervolumen kleiner ist als das Basisvolumen und eine Teilmenge der Gesamtmenge der Chemikalien, welche im zweiten Zielvolumen des flüssigen Gemischs im zweiten Tank (5) enthalten sein soll, enthält;
- Übertragen des Transfervolumens des flüssigen Gemischs vom ersten Tank (4) zum zweiten Tank (5) durch das Leitungssystem (9); und
- Befüllen des Tanksystems (3) mit zusätzlichem Wasser, um dem ersten Tank (4) das erste Zielvolumen des flüssigen Gemischs bereitzustellen und dem zweiten Tank (5) das zweite Zielvolumen des flüssigen Gemischs bereitzustellen, wobei das flüssige Gemisch sowohl im ersten Tank (4) als auch im zweiten Tank (5) die Chemikalien in der vorher festgelegten Konzentration enthält.

2. Verfahren nach Anspruch 1, ferner umfassend
- Bereitstellen des ersten Tanks (4) als einen hinteren Tank der landwirtschaftlichen Spritzmaschine;
- Bereitstellen des zweiten Tanks (5) als einen vorderen Tank der landwirtschaftlichen Spritzmaschine; und
- Ausgleichen der durch das Tanksystem (3) bereitgestellten Belastung der landwirtschaftliche Spritzmaschine, indem zuerst ein Basisvolumen Wasser in den zweiten Tank (5) gefüllt wird und danach das Basisvolumen flüssigen Gemischs in den ersten Tank (4) gefüllt wird.

3. Verfahren nach Anspruch 1 oder 2, vor dem Übertragen des Transfervolumens des flüssigen Gemischs ferner umfassend das Aufrühren des Basisvolumens an flüssigem Gemisch im ersten Tank (4), um eine homogene Mischung von Waser und Chemikalien zu erzeugen.

4. Verfahren nach mindestens einem der vorstehenden Ansprüche, ferner umfassend
- Befüllen des ersten Tanks (4) durch eine erste Füllleitung (11), welche im Leitungssystem (9) bereitgestellt ist;
- Befüllen des zweiten Tanks (5) durch eine zweite Füllleitung (12), welche im Leitungssystem (9) bereitgestellt ist;
- Reinigen der ersten Füllleitung (11) durch Einfüllen von zusätzlichem Wasser in den ersten Tank (4) während des Einfüllens von zusätzlichem Wasser in das Tanksystem (3); und
- Reinigen der zweiten Füllleitung (12) durch Einfüllen von zusätzlichem Wasser in den zweiten Tank (5) während des Einfüllens von zusätzlichem Wasser in das Tanksystem (3).

5. Verfahren nach Anspruch 4, ferner umfassend einen verbundenen Leitungsabschnitt im Leitungssystem, wobei der verbundene Leitungsabschnitt (13) sowohl Teil der ersten Füllleitung (11) als auch Teil der zweiten Füllleitung (12) ist.

6. Verfahren nach mindestens einem der vorstehenden Ansprüche, ferner umfassend
- Bereitstellen der Chemikalien in einem Behälter, welcher mit dem Leitungssystem (9) verbunden ist; und
- Bereitstellen einer Venturivorrichtung (14) im Leitungssystem (9), welche dafür eingerichtet ist, die Chemikalien durch eine Zuführungsleitung (15) in Wasser, welches im Leitungssystem (9) zum ersten Tank (4) fließt, einzusaugen.

7. Verfahren nach Anspruch 5 und 6, ferner umfassend das Bereitstellen der Venturivorrichtung (14) im verbundenen Leitungsabschnitt (13).

8. Verfahren nach mindestens einem der vorstehenden Ansprüche, wobei das Befüllen des Basisvolumens an flüssigem Gemisch in den ersten Tank (4) das Befüllen des ersten Tanks (4) bis zum ersten Zielvolumen umfasst.

9. Verfahren nach mindestens einem der vorstehenden Ansprüche, ferner umfassend das Bereitstellen der Fülldaten als Reaktion auf das Empfangen von Bedienereingaben durch eine Bedienerschnittstelle, welche mit der Steuervorrichtung (2) verbunden ist.

10. Verfahren nach mindestens einem der vorstehenden Ansprüche, wobei das Bestimmen des Transfervolumens in der Steuervorrichtung (2) ferner umfasst,
- Bereitstellen von Basisfülldaten, welche das Basisvolumen im ersten Tank (4) angeben; und
- Bestimmen des Transfervolumens mindestens basierend auf den Fülldaten und den Basisfülldaten.

11. Verfahren nach mindestens einem der vorstehenden Ansprüche, wobei das Bestimmen des Transfervolumens in der Steuervorrichtung (2) ferner umfasst,
- Bereitstellen von Mischungsdaten, welche Folgendes angeben
- mindestens eine der Mengen aus der Gruppe umfassend die Gesamtmenge der Chemikalien und die Teilmenge der Chemikalien, und
- eine Basiskonzentration der Chemikalien im Basisvolumen; und
- Bestimmen des Transfervolumens mindestens basierend auf den Fülldaten und den Mischungsdaten.

12. Verfahren nach mindestens einem der vorstehenden Ansprüche, vor dem Befüllen mindestens eines der Tanks aus der Gruppe umfassend den ersten Tank (4) und den zweiten Tank (5) im Befüllungsprozess ferner umfassend,
- Bereitstellen von Daten über den zulässigen Füllstand, welche einen ersten Schwellenwert für den ersten Tank (4) und einen zweiten Schwellenwert für den zweiten Tank (5) angeben;
- Bestimmen eines ersten aktuellen Füllstands für den ersten Tank (4);
- Bestimmen eines zweiten aktuellen Füllstands für den zweiten Tank (5); und
- Starten der Befüllung mindestens eines der Tanks aus der Gruppe umfassend den ersten Tank (4) und den zweiten Tank (5), falls der erste aktuelle Füllstand nicht höher ist als der erste Schwellenwert und der zweite aktuelle Füllstand nicht höher ist als der zweite Schwellenwert, während andernfalls das Befüllen des Tanksystems (3) verhindert wird.

13. Landwirtschaftliche Spritzmaschine aufweisend ein Spritzsystem, welches aufweist
- ein Tanksystem (3), welches einen ersten Tank (4) und einen zweiten Tank (5) aufweist, wobei beide Tanks dafür eingerichtet sind, ein Spritzmaterial, welches ein flüssiges Gemisch aus Wasser und Chemikalien ist, aufzunehmen;
- eine Pumpvorrichtung (8);
- eine Dosiervorrichtung (6), welche eine Mehrzahl von Düsen, welche dafür eingerichtet sind, das flüssige Gemisch zu dosieren, aufweist;
- ein Leitungssystem (9), welches mit dem ersten Tank (4), dem zweiten Tank (5), der Pumpvorrichtung (8) und der Dosiervorrichtung (6) verbunden ist; und
- eine Steuervorrichtung (2), welche dafür eingerichtet ist, mindestens einen Befüllungsprozess des Tanksystems (3) zu steuern;
wobei zum Befüllen des Tanksystems (3) die landwirtschaftliche Spritzmaschine dafür eingerichtet ist, beim Befüllungsprozess, welcher durch die Steuervorrichtung (2) gesteuert wird, den ersten Tank (4) mit einem ersten Zielvolumen des flüssigen Gemischs zu befüllen und den zweiten Tank (5) mit einem zweiten Zielvolumen des flüssigen Gemischs zu befüllen, wobei das flüssige Gemisch sowohl im ersten Tank (4) als auch im zweiten Tank (5) mit einer vorher festgelegten Konzentration der Chemikalien bereitgestellt wird, das Befüllen umfassend
- Bereitstellen von Fülldaten, welche das erste Zielvolumen und das zweite Zielvolumen angeben, in der Steuervorrichtung (2);
- Befüllen des ersten Tanks (4) mit einem Basisvolumen an flüssigem Gemisch, wobei das Basisvolumen des flüssigen Gemischs eine Gesamtmenge der Chemikalien enthält, welche im ersten Tank (4) und im zweiten Tank (5) bereitgestellt werden soll;
- Bestimmen eines Transfervolumens des flüssigen Gemischs durch die Steuervorrichtung (2), wobei das Transfervolumen kleiner ist als das Basisvolumen und eine Teilmenge der Gesamtmenge der Chemikalien, welche im zweiten Zielvolumen des flüssigen Gemischs im zweiten Tank (5) enthalten sein soll, enthält;
- Übertragen des Transfervolumens des flüssigen Gemischs vom ersten Tank (4) zum zweiten Tank (5) durch das Leitungssystem (9); und
- Befüllen des Tanksystems (3) mit zusätzlichem Wasser, um dem ersten Tank (4) das erste Zielvolumen des flüssigen Gemischs bereitzustellen und dem zweiten Tank (5) das zweite Zielvolumen des flüssigen Gemischs bereitzustellen, wobei das flüssige Gemisch sowohl im ersten Tank (4) als auch im zweiten Tank (5) die Chemikalien in der vorher festgelegten Konzentration enthält.

## Revendications

1. Procédé de remplissage d'un système de réservoir d'un pulvérisateur agricole avec une matière de pulvérisation liquide, comprenant :
- la prévision d'un pulvérisateur agricole ayant un système de pulvérisation (1) comprenant
- un système de réservoir (3) pourvu d'un premier réservoir (4) et d'un second réservoir (5) tous deux configurés pour recevoir une matière de pulvérisation qui est un mélange liquide contenant de l'eau et un produit chimique ;
- un dispositif de pompe (8) ;
- un dispositif de distribution (6) ayant une pluralité de buses configurées pour distribuer le mélange liquide ;
- un système de tuyauterie (9) relié au premier réservoir (4), au second réservoir (5), au dispositif de pompe (8) et au dispositif de distribution (6) ; et
- un dispositif de commande (2) configuré pour commander au moins un processus de remplissage du système de réservoir (3) ; et
- le remplissage du premier réservoir (4) avec un premier volume cible du mélange liquide et du second réservoir (5) avec un second volume cible du mélange liquide dans le processus de remplissage commandé par le dispositif de commande (2), le mélange liquide étant pourvu d'une concentration prédéterminée du produit chimique à la fois dans le premier réservoir (4) et le second réservoir (5), comprenant
- la fourniture de données de remplissage indiquant le premier volume cible et le second volume cible dans le dispositif de commande (2) ;
- le remplissage du premier réservoir (4) avec un volume de base du mélange liquide, le volume de base du mélange liquide contenant une quantité totale du produit chimique à fournir dans le premier réservoir (4) et le second réservoir (5) ;
- la détermination d'un volume de transfert du mélange liquide par le dispositif de commande (2), le volume de transfert étant inférieur au volume de base et contenant une partie de la quantité totale du produit chimique à contenir dans le second volume cible du mélange liquide dans le second réservoir (5) ;
- le transfert du volume de transfert du mélange liquide du premier réservoir (4) au second réservoir (5) par le système de tuyauterie (9) ; et
- le remplissage du système de réservoir (3) avec de l'eau supplémentaire pour fournir au premier réservoir (4) le premier volume cible du mélange liquide et au second réservoir (5) le second volume cible du mélange liquide, le mélange liquide contenant le produit chimique avec la concentration prédéterminée à la fois dans le premier réservoir (4) et le second réservoir (5).

2. Procédé selon la revendication 1, comprenant en outre
- la prévision du premier réservoir (4) comme réservoir arrière du pulvérisateur agricole
- la prévision du second réservoir (5) comme réservoir avant du pulvérisateur agricole ; et
- l'équilibrage de la charge fournie par le système de réservoir (3) au pulvérisateur agricole en mettant d'abord un volume de base d'eau dans le second réservoir (5) et ensuite le volume de base du mélange liquide dans le premier réservoir (4).

3. Procédé selon la revendication 1 ou 2, comprenant en outre, avant le transfert du volume de transfert du mélange liquide, l'agitation du volume de base du mélange liquide dans le premier réservoir (4) pour générer un mélange homogène d'eau et de produit chimique.

4. Procédé selon au moins l'une des revendications précédentes, comprenant en outre
- le remplissage du premier réservoir (4) par une première conduite de remplissage (11) munie du système de tuyauterie (9) ;
- le remplissage du second réservoir (5) par une deuxième conduite de remplissage (12) munie du système de tuyauterie (9) ;
- le nettoyage de la première conduite de remplissage (11) en mettant de l'eau supplémentaire dans le premier réservoir (4) tout en mettant de l'eau supplémentaire dans le système de réservoir (3) ; et
- le nettoyage de la deuxième conduite de remplissage (12) en mettant de l'eau supplémentaire dans le second réservoir (5) supplémentaire tout en mettant de l'eau supplémentaire dans le système de réservoir (3).

5. Procédé selon la revendication 4, comprenant en outre la prévision d'une section de conduite jointe dans le système de tuyauterie, la section de conduite jointe (13) faisant partie à la fois de la première conduite de remplissage (11) et de la seconde conduite de remplissage (12).

6. Procédé selon au moins l'une des revendications précédentes, comprenant en outre
- la fourniture du produit chimique dans un réservoir relié au système de tuyauterie (9) ; et
- la prévision d'un dispositif venturi (14) dans le système de tuyauterie (9) configuré pour aspirer le produit chimique du réservoir à travers une conduite d'alimentation (15) dans l'eau s'écoulant dans le système de tuyauterie (9) vers le premier réservoir (4).

7. Procédé selon les revendications 5 et 6, comprenant en outre la prévision du dispositif venturi (14) dans la section de conduite jointe (13).

8. Procédé selon au moins l'une des revendications précédentes, dans lequel le remplissage du premier réservoir (4) avec le volume de base de mélange liquide consiste à remplir le premier réservoir (4) jusqu'au premier volume cible.

9. Procédé selon au moins l'une des revendications précédentes, comprenant en outre la fourniture des données de remplissage en réponse à la réception d'une entrée utilisateur par l'intermédiaire d'une interface utilisateur connectée au dispositif de commande (2).

10. Procédé selon au moins l'une des revendications précédentes, dans lequel la détermination du volume de transfert comprend en outre, dans le dispositif de commande (2),
- la fourniture de données de remplissage de base indiquant le volume de base dans le premier réservoir (4) ; et
- la détermination du volume de transfert sur la base au moins des données de remplissage et des données de remplissage de base.

11. Procédé selon au moins l'une des revendications précédentes, dans lequel la détermination du volume de transfert comprend en outre, dans le dispositif de commande (2),
- la fourniture de données de mélange indicatives
- d'au moins une quantité parmi la quantité totale du produit chimique et la quantité partielle du produit chimique, et
- d'une concentration de base du produit chimique dans le volume de base ; et
- la détermination du volume de transfert sur la base au moins des données de remplissage et des données de mélange.

12. Procédé selon au moins l'une des revendications précédentes, comprenant en outre, avant le remplissage d'au moins l'un du premier réservoir (4) et du second réservoir (5) dans le processus de remplissage,
- la fourniture des données de niveau de remplissage autorisé indiquant un premier niveau seuil pour le premier réservoir (4) et un second niveau seuil pour le second réservoir (5) ;
- la détermination d'un premier niveau de remplissage actuel pour le premier réservoir (4) ;
- la détermination d'un second niveau de remplissage actuel pour le second réservoir (5) ; et
- le démarrage du remplissage d'au moins l'un des premier (4) et second (5) réservoirs, si le premier niveau de remplissage actuel n'est pas supérieur au premier niveau seuil et le second niveau de remplissage actuel n'est pas supérieur au second niveau seuil, sinon l'empêchement du remplissage du système de réservoir (3).

13. Pulvérisateur agricole comprenant un système de pulvérisation ayant
- un système de réservoir (3) pourvu d'un premier réservoir (4) et d'un second réservoir (5) tous deux configurés pour recevoir matière de pulvérisation qui est un mélange liquide contenant de l'eau et un produit chimique ;
- un dispositif de pompe (8) ;
- un dispositif de distribution (6) ayant une pluralité de buses configurées pour distribuer le mélange liquide ;
- un système de tuyauterie (9) relié au premier réservoir (4), au second réservoir (5), au dispositif de pompe (8) et au dispositif de distribution (6) ; et
- un dispositif de commande (2) configuré pour commander au moins un processus de remplissage du système de réservoir (3) ;
dans lequel, pour remplir le système de réservoir (3), le pulvérisateur agricole est configuré pour remplir le premier réservoir (4) avec un premier volume cible du mélange liquide et le second réservoir (5) avec un second volume cible du mélange liquide dans le processus de remplissage commandé par le dispositif de commande (2), le mélange liquide étant fourni avec une concentration prédéterminée du produit chimique à la fois dans le premier réservoir (4) et le second réservoir (5), comprenant
- la fourniture de données de remplissage indiquant le premier volume cible et le second volume cible dans le dispositif de commande (2) ;
- le remplissage du premier réservoir (4) avec un volume de base du mélange liquide, le volume de base du mélange liquide contenant une quantité totale du produit chimique à fournir dans le premier réservoir (4) et le second réservoir (5) ;
- la détermination d'un volume de transfert du mélange liquide par le dispositif de commande (2), le volume de transfert étant inférieur au volume de base et contenant une partie de la quantité totale du produit chimique à contenir dans le second volume cible du mélange liquide dans le second réservoir (5) ;
- le transfert du volume de transfert du mélange liquide du premier réservoir (4) au second réservoir (5) par le système de tuyauterie (9) ; et
- le remplissage du système de réservoir (3) avec de l'eau supplémentaire pour fournir au premier réservoir (4) le premier volume cible du mélange liquide et au second réservoir (5) le second volume cible du mélange liquide, le mélange liquide contenant le produit chimique avec la concentration prédéterminée à la fois dans le premier réservoir (4) et le second réservoir (5).
